# EUROPEAN PATENT APPLICATION

(11) **EP 3 583 874 A1**
(43) Date of publication of application: **25.12.2019**
(21) Application number: 18185920.8
(22) Date of filing: 26.07.2018
(51) Int. Cl.: A47J 31/24, A47J 31/52

(54) **BEVERAGE BREWING METHOD AND SYSTEM, AND BEVERAGE MAKER USING SAME**

(30) Priority: 19.06.2018 TW 107120985
(71) Applicant: IDRIP LTD., Apia (WS)
(72) Inventor: LIN, Chih-Te, 33055 Taoyuan City (TW)
(74) Representative: Cabinet Chaillot

(57) **Abstract**

A beverage brewing method implemented via a beverage brewing system includes the steps of setting multiple brewing parameters; reading an identification code of a beverage brewing material to generate an identification message; confirming the identification message indicates a brewing parameter that is a valid data and choosing one brewing parameter that corresponds to the identification message to generate a matched brewing parameter; downloading the matched brewing parameter to form a brewing implementation parameter for brewing the beverage brewing material; and forming a feedback message in the brewing process to change the matched brewing parameter into an invalid data to prevent repeated brewing of the beverage brewing material. Therefore, once a selected beverage brewing material has been brewed, the brewing parameter corresponding thereto will be changed into an invalid data and the same beverage brewing material would not be brewed repeatedly to ensure a stable quality of the brewed beverage.

## Description

### FIELD OF THE INVENTION

The present invention relates to a method for brewing beverages having stable quality, and more particularly, to a beverage brewing method and system as well as a beverage maker using same capable of avoiding a beverage brewing material from being brewed multiple times.

### BACKGROUND OF THE INVENTION

The world's cuisine culture is changing, diversified food ingredients are available, and a variety of ways for cooking food has been developed. To provide diversified liquid drinks in a convenient manner, many specific systems and methods for this purpose have also been developed.

Currently, specialty beverage stores are common in the market to prepare customized beverages for customers according to their preference in beverage temperature or sweetness, for example. However, in these beverage stores, the beverages are prepared manually, and the taste of the prepared beverages often changes with the beverage brewing operators' experience. Further, the taste of the same type of beverage prepared at different times, even by the same one brewing operator, might not be consistent. Therefore, it is very possible the beverages brewed from the same type of beverage brewing materials are not consistent in taste, no matter the beverages are brewed by inexperienced or experienced brewing operators.

### SUMMARY OF THE INVENTION

A primary object of the present invention is to provide a beverage brewing method, a beverage brewing system, and a beverage maker using such beverage brewing method and system, with which it is able to avoid the same one beverage brewing material from being brewed multiple times to adversely affect the taste of the brewed beverage and to ensure that beverages brewed from the same type of beverage brewing materials are always consistent in taste.

To achieve the above and other objects, the beverage brewing method provided according to the present invention for brewing a plurality of different types of beverage brewing materials includes a setting step, in which a plurality of brewing parameters is set, such that the brewing parameters are in a one-to-one correspondence to a plurality of identification codes separately provided on the plurality of beverage brewing materials and each of the brewing parameters is preset as a valid data; a reading step, in which the identification code on the beverage brewing material to be brewed is read in to generate a first identification message that corresponds to one of the brewing parameters; a checking step, in which one of the brewing parameters that matches the first identification message is selected to form a matched brewing parameter and it is confirmed the matched brewing parameter is indicated as a valid data; a loading-in and brewing step, in which the matched brewing parameter is downloaded to form a brewing implementation parameter and the beverage brewing material is brewed according to the brewing implementation parameter; a feeding back step, in which a feedback message is generated in the process of brewing the beverage brewing material and the matched brewing parameter is changed, according to the feedback message, from the valid data into an invalid data that indicates the beverage brewing material can no longer be brewed, such that the matched brewing parameter is also changed into an invalid brewing parameter; and a re-reading step, in which the same one identification code is read to generate a second identification message that corresponds to the same one brewing parameter corresponding to the first identification message. Then, the checking step is performed after the re-reading step to get the invalid brewing parameter according to the second identification message, and the invalid brewing parameter is confirmed as being indicated as an invalid data, which in turn stops the subsequent loading-in and brewing step from being performed.

According to the beverage brewing method of the present invention, when the invalid brewing parameter is confirmed as being indicated as an invalid data in the checking step, a reminding message is generated to remind a brewing operator that the beverage brewing material can not be used to proceed with any brewing operation.

To achieve the above and other objects, the beverage brewing system provided according to the present invention for brewing a plurality of different types of beverage brewing materials includes a cloud server, a reading mechanism and a brewing mechanism.

The cloud server sets a plurality of brewing parameters therein. The brewing parameters are in a one-to-one correspondence to a plurality of identification codes that are separately provided on the beverage brewing materials, and each of the brewing parameters is preset by the cloud server as a valid data. The reading mechanism is connected to the cloud server and capable of reading in the identification code on one of the beverage brewing materials, which is to be brewed, to thereby generate a first identification message that corresponds to one of the brewing parameters. Then, the cloud server selects one of the brewing parameters that matches the first identification message to form a matched brewing parameter and further confirms the matched brewing parameter is indicated as a valid data.

The brewing mechanism is connected to the cloud server and capable of downloading the matched brewing parameter to form a brewing implementation parameter for brewing the beverage brewing material. The cloud server generates a feedback message while the brewing mechanism brews the beverage brewing material, so as to indicate the beverage brewing material has been brewed. Meanwhile, the matched brewing parameter is changed, according to the feedback message, from the valid data into an invalid data that indicates the beverage brewing material can no longer be brewed, which in turn brings the matched brewing parameter to change into an invalid brewing parameter. Further, the reading mechanism can read the same one identification code to generate a second identification message that corresponds to the same one brewing parameter corresponding to the first identification message. The cloud server gets the invalid brewing parameter according to the second identification message and confirms the invalid brewing parameter as being indicated as an invalid data, which can not be downloaded by the brewing mechanism to form the brewing implementation parameter, so that the brewing mechanism could not brew the beverage brewing material without the brewing implementation parameter.

According to the beverage brewing system of the present invention, when the cloud server confirms the invalid brewing parameter is indicated as an invalid data, the cloud server generates a reminding message to remind a brewing operator that the beverage brewing material can not be used to proceed with any brewing operation.

To achieve the above and other objects, the beverage maker provided according to the present invention for brewing a plurality of different types of beverage brewing materials is connectable to a cloud server having a plurality of brewing parameters set therein and mainly includes a reading mechanism and a brewing mechanism.

The reading mechanism is connected to the cloud server and capable of reading in an identification code formed on one of the beverage brewing materials, which is to be brewed, to thereby generate a first identification message that corresponds to one of the brewing parameters in the cloud server. Then, the cloud server selects one of the brewing parameter that matches the first identification message to form a matched brewing parameter and further conforms the matched brewing parameter is indicated as a valid data.

The brewing mechanism is connected to the cloud server and capable of downloading the matched brewing parameter to form a brewing implementation parameter for brewing the beverage brewing material. The cloud server generates a feedback message while the brewing mechanism brews the beverage brewing material, so as to indicate the beverage brewing material has been brewed. Meanwhile, the matched brewing parameter is changed, according to the feedback message, from the valid data into an invalid data that indicates the beverage brewing material can no longer be brewed, which in turn brings the matched brewing parameter to change into an invalid brewing parameter.

The reading mechanism can read the same one identification code to generate a second identification message that corresponds to the same one brewing parameter corresponding to the first identification message. The cloud server gets the invalid brewing parameter according to the second identification message, and confirms the invalid brewing parameter as being indicated as an invalid data, which can not be downloaded by the brewing mechanism to form the brewing implementation parameter, so that the brewing mechanism could not brew the beverage brewing material without the brewing implementation parameter. When the cloud server confirms the invalid brewing parameter is indicated as an invalid data, the cloud server generates a reminding message to remind a brewing operator that the beverage brewing material can not be used to proceed with any brewing operation.

According to the beverage brewing method and system as well as the beverage maker of the present invention, the matched brewing parameter includes a recording message that indicates the brewing has been performed; and the recording message is changed, according to the feedback message, from an unmarked initial state into a marked used state.

Alternatively, the matched brewing parameter includes a counting message capable of recording the number of times the brewing has been performed; and the counting message indicates gradually decreased remaining number of times of brewing according to the feedback message until the indicated number is zero, indicating the beverage brewing material is now in an unusable state and is no longer allowed for brewing. Further, the brewing mechanism deletes the brewing implementation parameter after the beverage brewing material has been brewed.

The present invention is characterized in that a feedback message is generated when the beverage brewing material is being brewed, and the matched brewing parameter is changed according to the feedback message from a valid data into an invalid data. With these arrangements, it is able to avoid the same one beverage brewing material from being brewed multiple times to adversely affect the taste of the brewed beverage and to ensure that beverages brewed from the same type of beverage brewing materials are always consistent in taste.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a flowchart showing the steps included in a first preferred embodiment of a beverage brewing method according to the present invention;
Fig. 2 is a modular block diagram of a first preferred embodiment of a beverage brewing system according to the present invention;
Fig. 3 is a conceptual view of a setting step in the beverage brewing method of Fig. 1;
Figs. 4A and 4B are conceptual views of a reading step in the beverage brewing method of Fig. 1;
Fig. 5 is a conceptual view of a checking step in the beverage brewing method of Fig. 1;
Fig. 6 is a conceptual view of a loading-in and brewing step in the beverage brewing method of Fig. 1;
Fig. 7 is a conceptual view of a feeding back step in the beverage brewing method of Fig. 1;
Fig. 8 is a conceptual view of a re-reading step in the beverage brewing method of Fig. 1;
Fig. 9 shows a reminding message that might be shown on a display screen of a beverage maker according to the present invention;
Fig. 10 is a conceptual view of a checking step in a second preferred embodiment of the beverage brewing method according to the present invention; and
Fig. 11 is a conceptual view of a feeding back step in the second preferred embodiment of the beverage brewing method according to the present invention.

### DETAILED DESCRIPTION OF THE PREFERRED EMBODIMENTS

The present invention will now be described with some preferred embodiments thereof and by referring to the accompanying drawings. For the purpose of easy to understand, elements that are the same in the preferred embodiments are denoted by the same reference numerals.

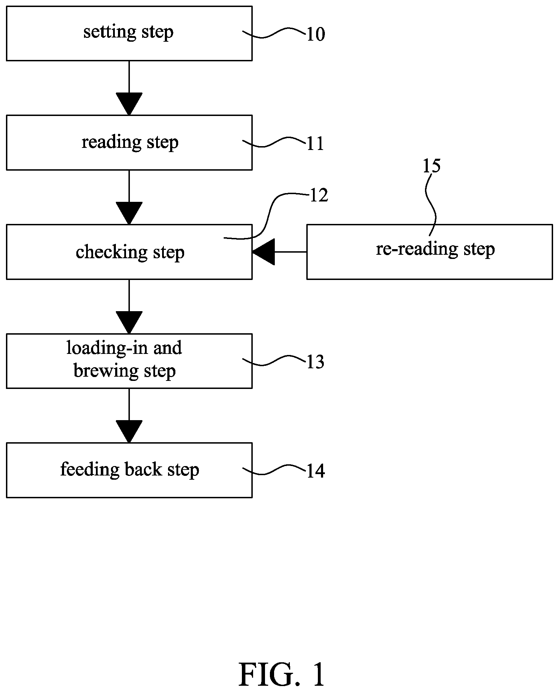

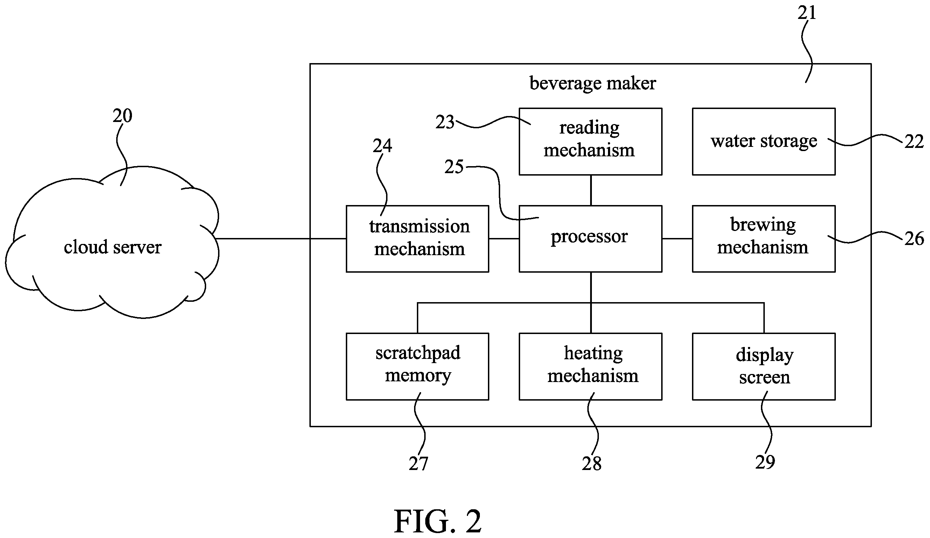

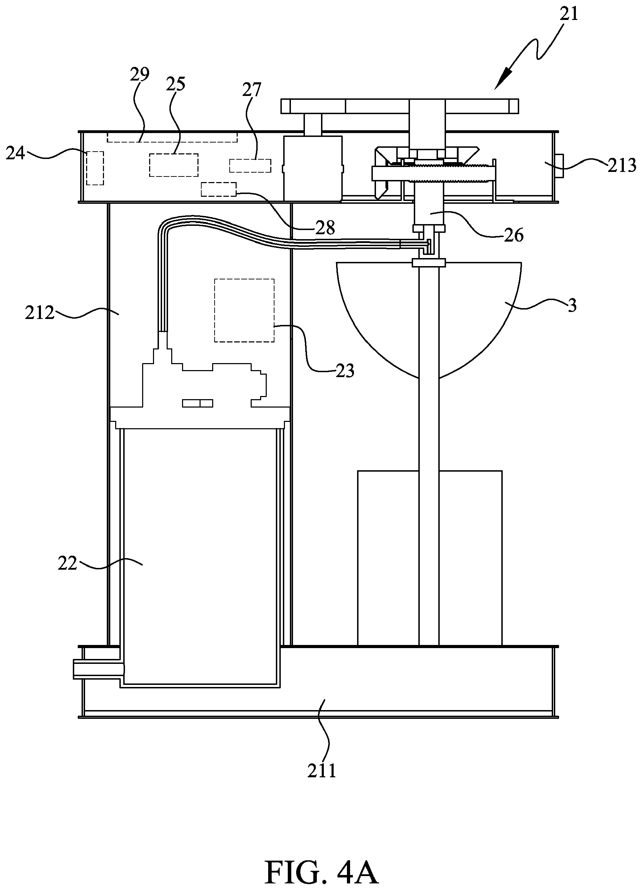

Please refer to Fig. 1, which is a flowchart showing the steps included in a first preferred embodiment of a beverage brewing method 1 according to the present invention; and to Fig. 2, which is a modular block diagram of a first preferred embodiment of a beverage brewing system 2 according to the present invention, with which the beverage brewing method of the present invention is implemented to brew a plurality of different types of beverage brewing materials 3 (see Fig. 4A). The beverage brewing system 2 includes a cloud server 20 and a beverage maker 21. As can be seen in Fig. 4A, the beverage maker 21 includes a base 211, a support 212 and a spout 213. The support 212 is internally mounted a water storage 22 for storing an amount of liquid and a reading mechanism 23 for sensing a barcode. The spout 213 is internally provided a transmission mechanism 24 connected to the cloud server 20, a processor 25 for processing a message, a brewing mechanism 26 operating according to a received message, a scratchpad memory 27 for storing a message, and a heating mechanism 28 for heating the liquid. And, the spout 213 is externally provided with a display screen 29. The reading mechanism 23, the transmission mechanism 24, the brewing mechanism 26, the scratchpad memory 27, the heating mechanism 28 and the display screen 29 are electrically connected to the processor 25.

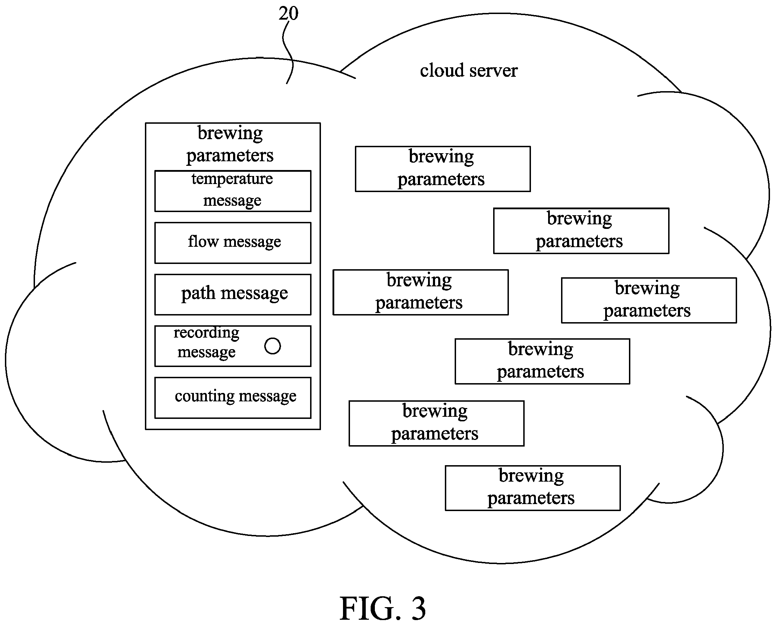

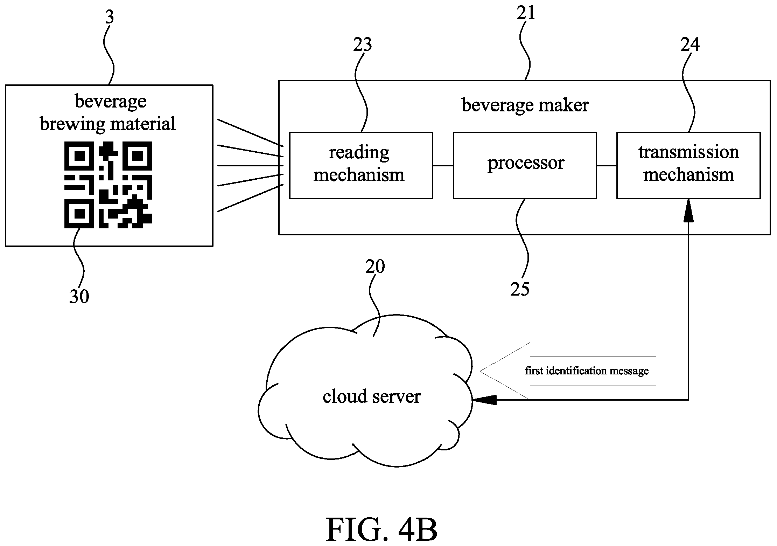

Fig. 3 is a conceptual view of a setting step 10 in the beverage brewing method of Fig. 1. Please refer to Figs. 1 and 3. In practical implementation of the beverage brewing method 1, first perform a setting step 10. It is noted a specific identification code 30 is assigned to and provided on each of a plurality of different types of beverage brewing materials 3 (see Fig. 4B). In the setting step 10, the cloud server 20 sets a plurality of brewing parameters therein, such that the brewing parameters are in a one-to-one correspondence to the identification codes 30. Thereafter, the cloud server 20 presets each of the brewing parameters as a valid data available for use in brewing a correspondent beverage brewing material 3 to thereby complete the setting step 10. In the illustrated first preferred embodiment, each of the brewing parameters includes a temperature message for controlling the temperature of the liquid for brewing, a flow message for controlling the quantity of liquid released for brewing each time, a path message for controlling the path the released liquid flows through, a recording message indicating the brewing has been performed, and a counting message recording the number of times the brewing has been performed.

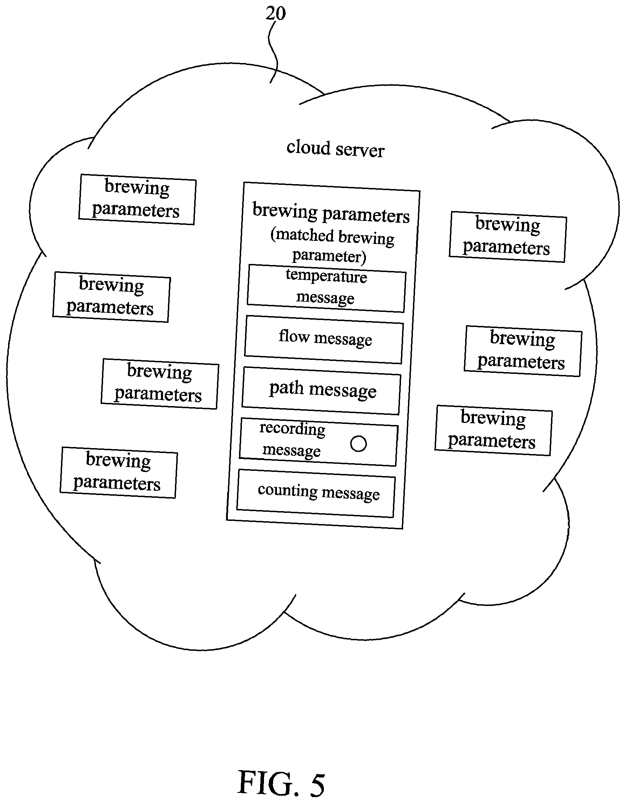

Please refer to Fig. 1 along with Figs. 4A and 4B, which are conceptual views of a reading step 11 in the beverage brewing method 1 of Fig. 1. In the reading step 11, a beverage brewing material 3 to be brewed is placed on the beverage maker 21 with the identification code 30 on an outer surface of the beverage brewing material 3 located within a reading area of the reading mechanism 23. Then, the reading mechanism 23 reads in the identification code 30 to generate a first identification message that corresponds to one of the brewing parameters, i.e. a matched brewing parameter in Fig. 5. The first identification message is transmitted to the processor 25, from where the first identification message is further transmitted via the transmission mechanism 24 to the cloud server 20 to complete the reading step 11. However, in the event the identification code 30 is not located within the reading area of the reading mechanism 23, it is not possible for the reading mechanism 23 to read in the identification code 30 and no first identification message will be generated, preventing the reading step 11 from being completed.

Please refer to Fig. 1 along with Fig. 5, which is a conceptual view of a checking step 12 in the beverage brewing method 1 of Fig. 1. After completion of the reading step 11, the checking step 12 is performed. On receipt of the first identification message, the cloud server 20 compares the plurality of brewing parameters with the first identification message and selects one of the brewing parameters that matches the first identification message to form a matched brewing parameter. Then, the cloud server 20 further confirms the matched brewing parameter is indicated as a valid data. In the illustrated first preferred embodiment, the cloud server 20 determines whether the matched brewing parameter is a valid data by checking whether the recording message of the matched brewing parameter indicates any record of performed brewing. As can be seen in Fig. 5, the recording message is shown as an unmarked initial state without indicating any brewing record, based on which the cloud server 20 determines the matched brewing parameter is a valid data.

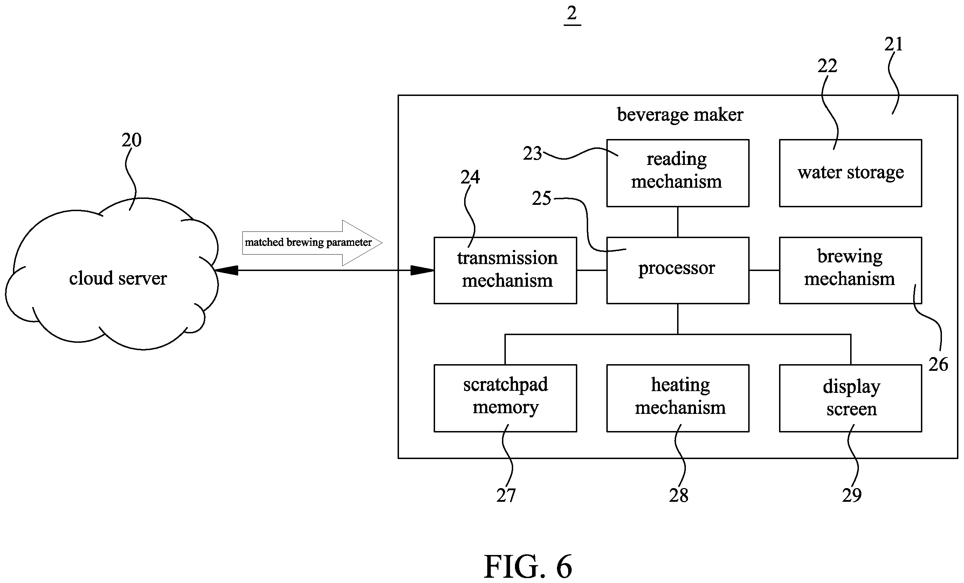

Fig. 6 is a conceptual view of a loading-in and brewing step in the beverage brewing method 1 of Fig. 1. Please refer to Fig. 1 along with Fig. 6. After the matched brewing parameter has been determined by the cloud server 20 as a valid data, a subsequent loading-in and brewing step 13 starts, in which the beverage maker 21 is caused to download the matched brewing parameter to form a brewing implementation parameter, which is first stored in the scratchpad memory 27. Then, the processor 25 of the beverage maker 21 reads in the brewing implementation parameter for the heating mechanism 28 to heat the liquid in the water storage 22 according to the temperature message of the brewing implementation parameter, so that the liquid in the water storage 22 is heated to a preset temperature. The brewing mechanism 26 then proceeds with the brewing of the beverage brewing material 3 according to the flow message and the path message of the brewing parameter, so that the heated liquid is mixed with powder of the beverage brewing material 3 to produce an extract (not shown). And, after completion of the loading-in and brewing step 13, the processor 25 will delete the brewing implementation parameter from the scratchpad memory 27, so that the scratchpad memory 27 is now in a blank state without any message stored thereon.

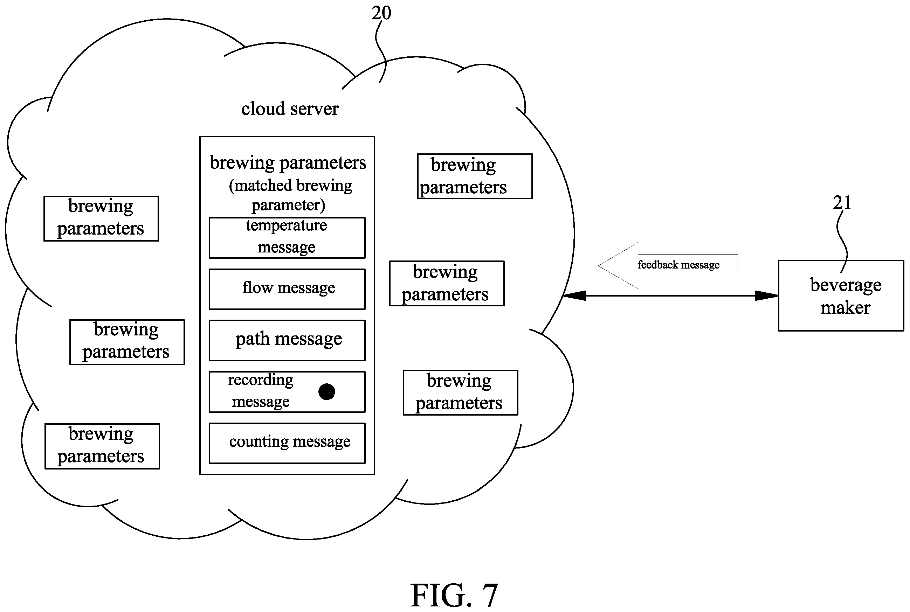

Fig. 7 is a conceptual view of a feeding back step 14 in the beverage brewing method 1 of Fig. 1. Please refer to Fig. 1 along with Fig. 7. When the process of brewing the beverage brewing material 3 performed by the brewing mechanism 26 has been completed by 30%, a feeding back step 14 starts. That is, in the process the brewing mechanism 26 brews the beverage brewing material 3, the processor 25 generates a feedback message, which is transmitted to the transmission mechanism 24 for further transmitting to the cloud server 20, so that the matched brewing parameter in the cloud server 20 is changed, according to the feedback message, from the valid data into an invalid data when the cloud server 20 receives the feedback message. The invalid data indicates the beverage brewing material 3 can no longer be brewed. At this point, the matched brewing parameter is changed into an invalid brewing parameter. More specifically, in the illustrated first preferred embodiment, when the cloud server 20 receives the feedback message, the recording message of the matched brewing parameter is marked according to the feedback message, indicating the brewing of the beverage brewing material 3 has been recorded. At this point, the recording message is changed from the unmarked initial state into a marked used state to indicate a brewing process has been recorded. Meanwhile, the matched brewing parameter is also changed into an invalid brewing parameter. However, all other brewing parameters are still valid data.

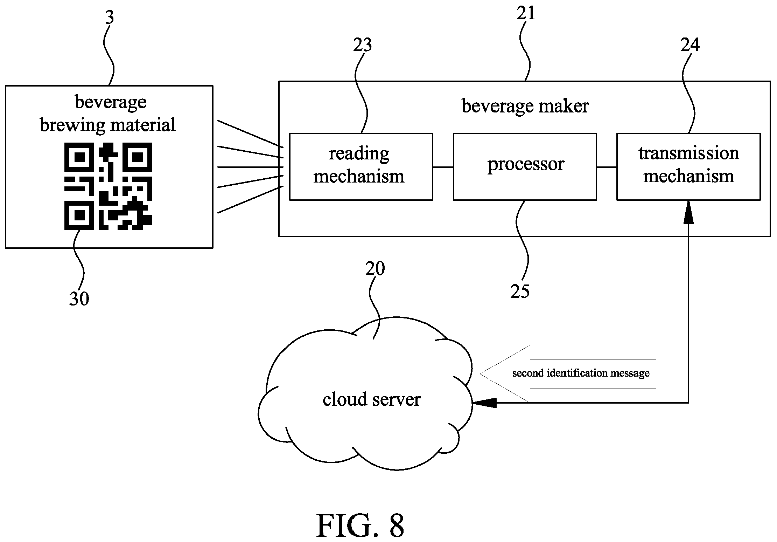

Please refer to Fig. 1 along with Fig. 8, which is a conceptual view of a re-reading step 15 in the beverage brewing method 1 of Fig. 1. In the event the beverage brewing material 3 that has been brewed is placed on the beverage maker 21 again, the reading mechanism 23 will similarly read in the identification code 30 on the beverage brewing material 3. This is referred to as a re-reading step 15, in which the reading mechanism 23 reads in the identification code 30 to generate a second identification message that corresponds to the same one brewing parameter corresponding to the first identification message and having been changed into an invalid brewing parameter. The second identification message is transmitted to the transmission mechanism 24, from where the cloud server 20 receives the second identification message.

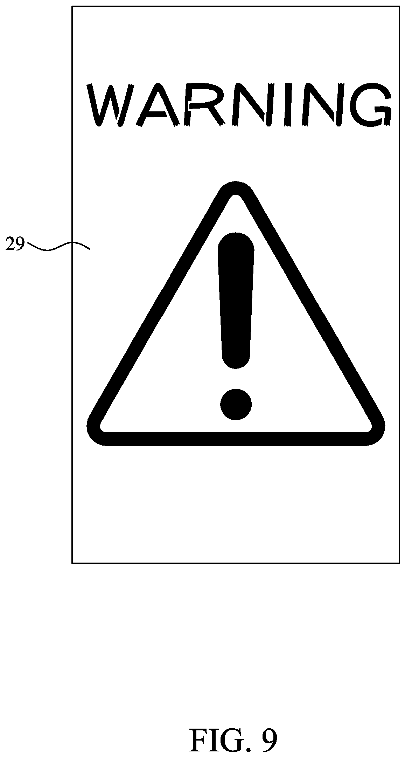

Please refer to Fig. 9. The checking step 12 is performed after the re-reading step 15 is completed. At this point, based on the second identification message, the cloud server 20 will get an invalid brewing parameter and confirms the invalid brewing parameter is indicated as an invalid data. At this point, the cloud server 20 also generates a reminding message, which is transmitted to the processor 25 via the transmission mechanism 24. Through operation of the processor 25, the reminding message is shown on the display screen 29 to remind a brewing operator that the current beverage brewing material 3 can not be used to proceed with any brewing operation. Also, since the invalid brewing parameter is an invalid data that could not be downloaded by the beverage maker 21, no message will be stored in the scratchpad memory 27 and both of the heating mechanism 28 and the brewing mechanism 26 are unable to work.

A second preferred embodiment of the beverage brewing method according to the present invention is different from the first one only in the checking step 12 and the feeding back step 14. Therefore, all other steps in the second preferred embodiment are not repeatedly described herein.

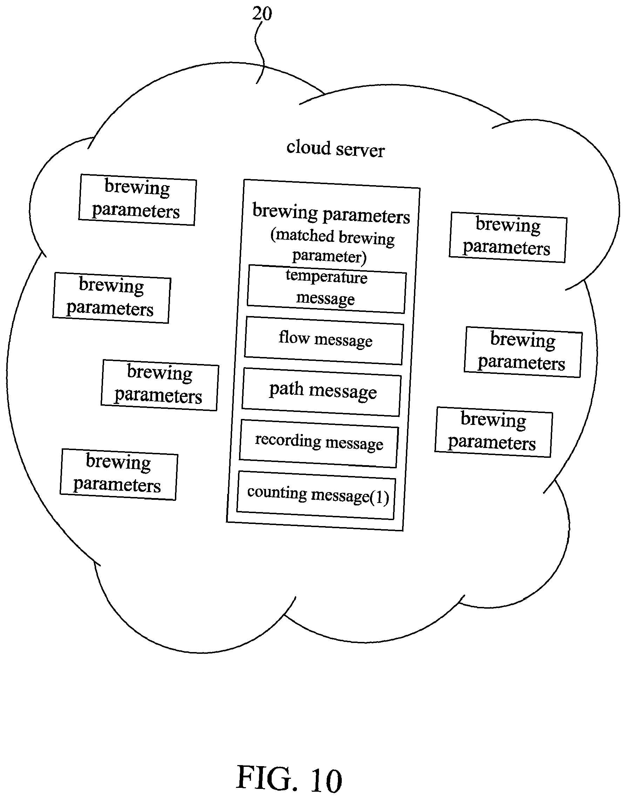

Please refer to Fig. 10, which is a conceptual view of the checking step 12 in the second preferred embodiment of the beverage brewing method according to the present invention. As shown, in the checking step 12 according to the second preferred embodiment, the cloud server 20 determines whether the matched brewing parameter is indicated as a valid data by checking whether the counting message of the matched brewing parameter still shows any remaining number of times of brewing. As can be seen in Fig. 10, the counting message shows the digit "1", indicating the beverage brewing material 3 can still be brewed once. Therefore, the cloud server 20 confirms the matched brewing parameter is a valid data and the subsequent loading-in and brewing step 13 can be performed.

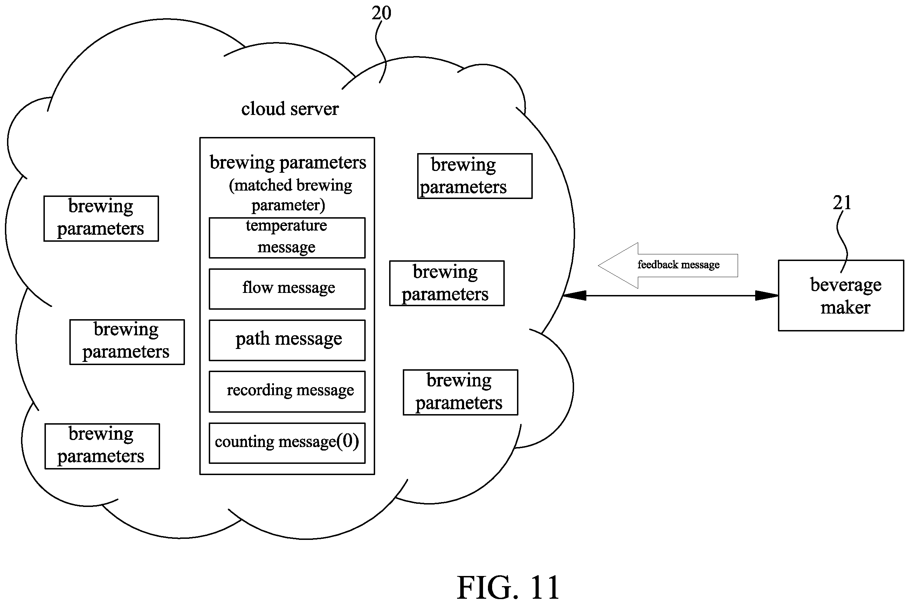

Please refer to Fig. 11, which is a conceptual view of the feeding back step 14 in the second preferred embodiment of the beverage brewing method according to the present invention. As shown, in the process of the feeding back step 14 according to the second preferred embodiment, the counting message of the matched brewing parameter decreases the remaining number of times of brewing by one each time a feedback message is received. When the digit "1" shown by the counting message is changed to the digit "0", it indicates the beverage brewing material 3 is now in an unusable state and is no longer allowed for brewing. At this point, the matched brewing parameter is changed into an invalid brewing parameter.

The present invention has been described with some preferred embodiments thereof and it is understood that many changes and modifications in the described embodiments can be carried out without departing from the scope and the spirit of the invention that is intended to be limited only by the appended claims.

## Claims

1. A beverage brewing method for brewing a plurality of different types of beverage brewing materials, comprising:
a setting step, in which a plurality of brewing parameters is set, such that the brewing parameters are in a one-to-one correspondence to a plurality of identification codes separately provided on the plurality of beverage brewing materials and each of the brewing parameters is preset as a valid data;
a reading step, in which the identification code on the beverage brewing material to be brewed is read in to generate a first identification message that corresponds to one of the brewing parameters;
a checking step, in which one of the brewing parameters that matches the first identification message is selected to form a matched brewing parameter and it is confirmed the matched brewing parameter is indicated as a valid data;
a loading-in and brewing step, in which the matched brewing parameter is downloaded to form a brewing implementation parameter and the beverage brewing material is brewed according to the brewing implementation parameter;
and
a feeding back step, in which a feedback message is generated in the process of brewing the beverage brewing material and the matched brewing parameter is changed, according to the feedback message, from the valid data into an invalid data that indicates the beverage brewing material can no longer be brewed, such that the matched brewing parameter is also changed into an invalid brewing parameter.

2. The beverage brewing method as claimed in claim 1, further comprising a re-reading step, in which the same one identification code is read to generate a second identification message that corresponds to the same one brewing parameter corresponding to the first identification message; and wherein the checking step is performed after the re-reading step to get the invalid brewing parameter according to the second identification message, and the invalid brewing parameter is confirmed as being indicated as an invalid data, which in turn stops the subsequent loading-in and brewing step from being performed.

3. The beverage brewing method as claimed in claim 2, wherein when the invalid brewing parameter is confirmed as being indicated as an invalid data in the checking step, a reminding message is generated to remind a brewing operator that the beverage brewing material can not be used to proceed with any brewing operation.

4. The beverage brewing method as claimed in claim 1, wherein the brewing implementation parameter is deleted after the beverage brewing material has been brewed.

5. The beverage brewing method as claimed in claim 1, wherein the matched brewing parameter includes a recording message that indicates the brewing has been performed; and the recording message being changed, according to the feedback message, from an unmarked initial state into a marked used state.

6. The beverage brewing method as claimed in claim 1, wherein the matched brewing parameter includes a counting message capable of recording the number of times the brewing has been performed; and the counting message indicating gradually decreased remaining number of times of brewing according to the feedback message until the indicated number is zero, indicating the beverage brewing material is now in an unusable state and is no longer allowed for brewing.

7. A beverage brewing system for brewing a plurality of different types of beverage brewing materials, comprising:
a cloud server for setting a plurality of brewing parameters therein; the brewing parameters being in a one-to-one correspondence to a plurality of identification codes that are separately provided on the plurality of beverage brewing materials, and each of the brewing parameters being preset by the cloud server as a valid data;
a reading mechanism being connected to the cloud server and capable of reading in the identification code on one of the beverage brewing materials, which is to be brewed, to thereby generate a first identification message that corresponds to one of the brewing parameters in the cloud server; and the cloud server selecting one of the brewing parameters that matches the first identification message to form a matched brewing parameter and further confirming the matched brewing parameter is indicated as a valid data; and
a brewing mechanism being connected to the cloud server and capable of downloading the matched brewing parameter to form a brewing implementation parameter for brewing the beverage brewing material; the cloud server generating a feedback message while the brewing mechanism brews the beverage brewing material, so as to indicate the beverage brewing material has been brewed; and the matched brewing parameter being changed, according to the feedback message,
from the valid data into an invalid data that indicates the beverage brewing material can no longer be brewed, which in turn bringing the matched brewing parameter to change into an invalid brewing parameter.

8. The beverage brewing system as claimed in claim 7, wherein the reading mechanism can read the same one identification code to generate a second identification message that corresponds to the same one brewing parameter corresponding to the first identification message; the cloud server getting the invalid brewing parameter according to the second identification message and confirming the invalid brewing parameter as being indicated as an invalid data, which can not be downloaded by the brewing mechanism to form the brewing implementation parameter, so that the brewing mechanism could not brew the beverage brewing material without the brewing implementation parameter.

9. The beverage brewing system as claimed in claim 8, wherein when the cloud server confirms the invalid brewing parameter is indicated as an invalid data, the cloud server generates a reminding message to remind a brewing operator that the beverage brewing material can not be used to proceed with any brewing operation.

10. The beverage brewing system as claimed in claim 7, wherein the brewing mechanism deletes the brewing implementation parameter after the beverage brewing material has been brewed.

11. The beverage brewing system as claimed in claim 7, wherein the matched brewing parameter includes a recording message that indicates the brewing has been performed; and the recording message being changed, according to the feedback message, from an unmarked initial state into a marked used state.

12. The beverage brewing system as claimed in claim 7, wherein the matched brewing parameter includes a counting message capable of recording the number of times the brewing has been performed; and the counting message indicating gradually decreased remaining number of times of brewing according to the feedback message until the indicated number is zero, indicating the beverage brewing material is now in an unusable state and is no longer allowed for brewing.

13. A beverage maker for brewing a plurality of different types of beverage brewing materials and connectable to a cloud server having a plurality of brewing parameters set therein, comprising:
a reading mechanism being connected to the cloud server and capable of reading in an identification code formed on one of the beverage brewing materials, which is to be brewed, to thereby generate a first identification message that corresponds to one of the brewing parameters in the cloud server, and the cloud server selecting one of the brewing parameter that matches the first identification message to form a matched brewing parameter and further conforming the matched brewing parameter is indicated as a valid data; and
a brewing mechanism being connected to the cloud server and capable of downloading the matched brewing parameter to form a brewing implementation parameter for brewing the beverage brewing material; the cloud server generating a feedback message while the brewing mechanism brews the beverage brewing material, so as to indicate the beverage brewing material has been brewed; and the matched brewing parameter being changed, according to the feedback message,
from the valid data into an invalid data that indicates the beverage brewing material can no longer be brewed, which in turn bringing the matched brewing parameter to change into an invalid brewing parameter.

14. The beverage maker as claimed in claim 13, wherein the reading mechanism can read the same one identification code to generate a second identification message that corresponds to the same one brewing parameter corresponding to the first identification message; the cloud server getting the invalid brewing parameter according to the second identification message and confirming the invalid brewing parameter as being indicated as an invalid data, which can not be downloaded by the brewing mechanism to form the brewing implementation parameter, so that the brewing mechanism could not brew the beverage brewing material without the brewing implementation parameter.

15. The beverage maker as claimed in claim 14, wherein when the cloud server confirms the invalid brewing parameter is indicated as an invalid data, the cloud server generates a reminding message to remind a brewing operator that the beverage brewing material can not be used to proceed with any brewing operation.

16. The beverage maker as claimed in claim 13, wherein the brewing mechanism deletes the brewing implementation parameter after the beverage brewing material has been brewed.

17. The beverage maker as claimed in claim 13, wherein the matched brewing parameter includes a recording message that indicates the brewing has been performed; and the recording message being changed, according to the feedback message, from an unmarked initial state into a marked used state.

18. The beverage maker as claimed in claim 13, wherein the matched brewing parameter includes a counting message capable of recording the number of times the brewing has been performed; and the counting message indicating gradually decreased remaining number of times of brewing according to the feedback message until the indicated number is zero, indicating the beverage brewing material is now in an unusable state and is no longer allowed for brewing.
